# EUROPÄISCHE PATENTSCHRIFT

(11) **EP 1 612 459 B1**
(45) Veröffentlichungstag und Bekanntmachung des Hinweises auf die Patenterteilung: **11.07.2007**
(21) Anmeldenummer: 05011874.4
(22) Anmeldetag: 02.06.2005
(51) Int. Cl.: F16H 63/32

(54) **Vorrichtung zur Übertragung von Schaltbewegungen in einem Kraftfahrzeugschaltgetriebe und Verfahren zu deren Herstellung**
Shift movement transmitting device in a vehicle transmission and method of manufacturing such a device
Dispositif de transmission de mouvement de changement de vitesses dans une boite de vitesses pour véhicule et procédé de fabrication d'un tel dispositif

(30) Priorität: 03.07.2004 DE 102004032293
(43) Veröffentlichungstag der Anmeldung: 04.01.2006
(73) Patentinhaber: Selzer Fertigungstechnik GmbH & Co.KG, 35759 Driedorf-Roth (DE)
(72) Erfinder: Volk, Matthias, 35625 Hüttenberg (DE)
(74) Vertreter: Oppermann, Mark

(56) Entgegenhaltungen:
- EP-A- 1 079 154
- DE-A1- 10 159 441
- DE-A1- 10 220 062

## Beschreibung

### TECHNISCHES GEBIET

Die Erfindung bezieht sich auf eine Vorrichtung zur Übertragung von Schaltbewegungen in einem Kraftfahrzeug-Schaltgetriebe gemäß dem Oberbegriff des Patentanspruchs 1, wie sie massenweise in der Automobilindustrie zum Einsatz kommen, und schließt auch ein Verfahren zu deren Herstellung ein.

### STAND DER TECHNIK

Im Stand der Technik sind bereits Vorrichtungen zur Übertragung von Schaltbewegungen in einem Kraftfahrzeug-Schaltgetriebe bekannt, die eine Schaltgabel und eine Schaltschiene aufweisen, welche mittels eines rechtwinklig zur Schaltschienenachse gerichteten Schwenkzapfens in Richtung der Schaltschienenachse relativ zueinander unverschiebbar festgelegt sind, während sie um die Schwenkzapfenachse relativ zueinander um einen geringen Winkelbetrag verschwenkbar sind. Das hier ermöglichte, geringe Schwenkwinkelspiel um etwa 1 bis 2° dient dazu, im Betrieb auftretende Taumelbewegungen der Schaltmuffe, in welche die Schaltgabel mit ihren Gabelenden eingreift, auszugleichen und somit die Übertragung von Schwingungen in das Schaltgestänge zu vermeiden.

Eine solche Vorrichtung ist in der gattungsbildenden EP 1 079 154 B1 der Anmelderin offenbart. Bei diesem Stand der Technik ist an die Schaltgabel ein Aufnahmevorsprung für die Aufnahme der Schaltschiene schmiedetechnisch angeformt, der eine Öffnung aufweist, an der zwei gegenüberliegende, zueinander planparallele Führungsflächen durch spanende Bearbeitung des Aufnahmevorsprungs ausgebildet sind, welche die Schaltgabel verschwenkbar um den durch den Aufnahmevorsprung senkrecht zu den Führungsflächen und durch die Schaltschiene hindurchgeführten Schwenkzapfen an der Schaltschiene führen.

Bei der Herstellung der vorbekannten Vorrichtung müssen zunächst der lichte Abstand der Führungsflächen an der Öffnung des Aufnahmevorsprungs der Schaltgabel einerseits und die Dicke des in der Öffnung des Aufnahmevorsprungs aufzunehmenden Abschnitts der Schaltschiene andererseits zur Erzielung einer leichtgängigen Führung hinsichtlich ihrer Maßtoleranzen aufeinander abgestimmt werden. Sodann wird die Schaltgabel auf die Schaltschiene aufgeschoben, worauf die Schaltschiene über daran befindliche Referenzflächen und die Schaltgabel über Funktionsflächen der Gabelenden in zueinander genau justierter Lage festgelegt werden. Hierauf werden der Aufnahmevorsprung an der Schaltgabel und die Schaltschiene in dieser festgelegten Relativlage zur Bildung einer Aufnahmebohrung für den Schwenkzapfen in einem Bohrvorgang gemeinsam gebohrt, bevor schließlich der Schwenkzapfen in die Aufnahmebohrung zur verschwenkbaren Verbindung der Schaltgabel mit der Schaltschiene eingeschoben wird.

Obgleich bei diesem Stand der Technik die Schaltgabel sehr toleranzarm und dennoch leichtgängig an der Schaltschiene schwenkgelagert ist, ist die vorbekannte Vorrichtung im Hinblick auf eine wirtschaftliche Herstellung noch verbesserungsbedürftig.

### DARSTELLUNG DER ERFINDUNG

Der Erfindung liegt demgemäß die Aufgabe zugrunde, eine gemessen am Stand der Technik kostengünstiger herstellbare, eine Schaltgabel und eine Schaltschiene aufweisende Vorrichtung zur Übertragung von Schaltbewegungen in einem Kraftfahrzeug-Schaltgetriebe zu schaffen, bei der die Schaltgabel möglichst leichtgängig und mit dennoch geringem Kippspiel an der Schaltschiene schwenkgelagert ist. Die Erfindungsaufgabe umfaßt auch die Angabe eines hierfür besonders geeigneten Herstellungsverfahrens.

Diese Aufgabe wird durch die im Patentanspruch 1 bzw. 9 angegebenen Merkmale gelöst. Vorteilhafte bzw. zweckmäßige Weiterbildungen der Erfindung sind Gegenstand der Patentansprüche 2 bis 8 sowie 10 und 11.

Bei einer Vorrichtung zur Übertragung von Schaltbewegungen in einem Kraftfahrzeug-Schaltgetriebe, die eine Schaltschiene und eine Schaltgabel aufweist, welche mittels eines rechtwinklig zur Schaltschienenachse gerichteten Schwenkzapfens in Richtung der Schaltschienenachse relativ zueinander unverschiebbar festgelegt sind, während sie um die Schwenkzapfenachse relativ zueinander um einen geringen Winkelbetrag verschwenkbar sind, sind gemäß der Erfindung die Schaltschiene und die Schaltgabel unter Ausbildung einer Stufenbohrung miteinander gebohrt, mit einer Stufe an der Schaltschiene und einer Stufe an der Schaltgabel, während der Schwenkzapfen zwei Ringflächen aufweist, von denen jede einer Stufe der Stufenbohrung zugeordnet ist und deren axialer Abstand geringfügig größer ist als der axiale Abstand zwischen den Stufen der Stufenbohrung, wobei der Außendurchmesser des Schwenkzapfens zwischen dessen Ringflächen geringfügig kleiner ist als der Innendurchmesser der Stufenbohrung zwischen deren Stufen, und wobei der Schwenkzapfen derart in der Stufenbohrung befestigt ist, daß dessen durchmesserkleinere Ringfläche an der durchmesserkleineren Stufe der Stufenbohrung anliegt, während die durchmessergrößere Ringfläche des Schwenkzapfens der durchmessergrößeren Stufe der Stufenbohrung gegenüberliegt.

Durch Ausbildung der Schwenkverbindung zwischen Schaltschiene und Schaltgabel mittels der sowohl an der Schaltschiene als auch an der Schaltgabel eine Stufe aufweisenden Stufenbohrung, in die der mit zwei den Stufen zugeordneten Ringflächen versehene Schwenkzapfen eingesetzt ist, kommt es im Gegensatz zum gattungsbildenden Stand der Technik auf die Genauigkeit bzw. die Dickentoleranzen von Schaltschiene und Schaltgabel nicht mehr an, so daß sowohl für die Schaltschiene als auch für die Schaltgabel ein kostengünstiges Rohmaterial eingesetzt werden kann, welches als solches schon keine engen Maßtoleranzen einzuhalten braucht und im Verbindungsbereich von Schaltschiene und Schaltgabel zur Erzielung bestimmter Maßtoleranzen auch nicht aufwendig vorbearbeitet werden muß. Allein maßgeblich für die Leichtgängigkeit und ein geringes Kippspiel der Schwenkverbindung sind vielmehr die vorbeschriebenen Abstands- und Durchmesserverhältnisse an der Stufenbohrung und dem Schwenkzapfen, gemäß denen der axiale Abstand zwischen den Ringflächen am Schwenkzapfen geringfügig größer ist als der axiale Abstand der Stufen der Stufenbohrung, während der Außendurchmesser des Schwenkzapfens zwischen dessen Ringflächen geringfügig kleiner ist als der Innendurchmesser der Stufenbohrung zwischen deren Stufen, was sich mit vergleichsweise geringen Kosten realisieren läßt.

So kann der Schwenkzapfen kostengünstig etwa in einem Drehautomaten von einem Stangenmaterial abgedreht werden, ohne die Notwendigkeit von Nachbearbeitungsschritten. Die einzelnen Bohrungsabschnitte der Stufenbohrung hingegen können grundsätzlich z.B. mit Folgebohrwerkzeugen in einer Aufspannung von Schaltschiene und Schaltgabel ausgebildet werden. Im Hinblick auf eine kostengünstige Erzielung enger Toleranzen an der Stufenbohrung besonders bevorzugt ist jedoch ein Verfahren zur Herstellung der erfindungsgemäßen Vorrichtung, welches die folgenden Schritte umfaßt: (a) Übereinanderlegen, Ausrichten und Festlegen von Schaltgabel und Schaltschiene in zueinander genau justierter Lage, (b) gemeinsames Bohren von Schaltgabel und Schaltschiene zur Ausbildung der Stufenbohrung mittels eines Zweifach-Stufenbohrers in einem Bohrvorgang, (c) Einsetzen des Schwenkzapfens in die Stufenbohrung und (d) Befestigen des Schwenkzapfens in der Stufenbohrung.

Im Hinblick auf eine gute Zugänglichkeit der Bearbeitungsstelle bei der Ausbildung der Stufenbohrung ist es von Vorteil, wenn die Stufenbohrung ausgehend von der Schaltschiene in die Schaltschiene und die Schaltgabel eingebracht ist. Den jeweiligen Funktionserfordernissen entsprechend (Lochlaibung an der Schaltgabel / Reibpartner bei einer Relativdrehung von Schwenkzapfen und Schaltgabel) kann es aber auch zweckmäßig sein, die Stufenbohrung ausgehend von der Schaltgabel in die Schaltgabel und die Schaltschiene einzubringen.

In weiterer Ausgestaltung der erfindungsgemäßen Vorrichtung kann die Stufenbohrung drei Bohrungsabschnitte mit sich von Abschnitt zu Abschnitt verkleinerndem Durchmesser aufweisen, die über die Stufen miteinander verbunden sind, wobei der Schwenkzapfen einen im durchmessergrößten Bohrungsabschnitt aufgenommenen, die durchmessergrößere Ringfläche ausbildenden Bund, einen im mittleren Bohrungsabschnitt aufgenommenen, die durchmesserkleinere Ringfläche ausbildenden Lagerabschnitt und einen im durchmesserkleinsten Bohrungsabschnitt aufgenommenen Befestigungsabschnitt hat, mittels dessen der Schwenkzapfen in der Stufenbohrung befestigt ist, so daß bei der Montage der Schwenkverbindung lediglich drei Teile zu handhaben sind, nämlich Schaltschiene, Schaltgabel und Schwenkzapfen. Hierbei ist es grundsätzlich denkbar, den Schwenkzapfen z.B. mittels einer Schraubverbindung in der Stufenbohrung zu befestigen, wobei der Befestigungsabschnitt des Schwenkzapfens mit einem Gewinde versehen ist, das in ein im durchmesserkleinsten Bohrungsabschnitt der Stufenbohrung vorgesehenes Gegengewinde eingeschraubt ist. Insbesondere im Hinblick auf eine kostengünstige Herstellung bevorzugt ist jedoch eine Ausgestaltung, bei der der Befestigungsabschnitt des Schwenkzapfens mit seinem Ende über den durchmesserkleinsten Bohrungsabschnitt der Stufenbohrung vorsteht, wobei das vorstehende Ende des Befestigungsabschnitts zu einem Nietkopf angestaucht ist, so daß der Schwenkzapfen zwischen seiner durchmesserkleineren Ringfläche und dem Nietkopf im durchmesserkleinsten Bohrungsabschnitt der Stufenbohrung gehalten ist. Vorteilhaft kann dabei das Befestigen des Schwenkzapfens in der Stufenbohrung zur Ausbildung des Nietkopfs ein Vernieten - z.B. ein Warmvernieten, Taumelvernieten od.dgl. - des über den durchmesserkleinsten Bohrungsabschnitt der Stufenbohrung vorstehenden Endes des Befestigungsabschnitts des Schwenkzapfens umfassen.

In einer Alternative zu der vorbeschriebenen Ausgestaltung der erfindungsgemäßen Vorrichtung kann die Stufenbohrung drei Bohrungsabschnitte mit sich von Abschnitt zu Abschnitt verkleinerndem Durchmesser aufweisen, die über die Stufen miteinander verbunden sind, wobei der Schwenkzapfen einen im durchmessergrößten Bohrungsabschnitt aufgenommenen, die durchmessergrößere Ringfläche ausbildenden Bund, einen im mittleren Bohrungsabschnitt aufgenommenen, die durchmesserkleinere Ringfläche ausbildenden Lagerabschnitt und eine zentrale Durchgangsbohrung zur Aufnahme eines Befestigungselements hat, das den Bund des Schwenkzapfens mit einem Kopf hintergreift und sich durch die Durchgangsbohrung im Schwenkzapfen hindurch in den durchmesserkleinsten Bohrungsabschnitt der Stufenbohrung hinein mit einem Schaft erstreckt, mittels dessen das Befestigungselement und damit der Schwenkzapfen in der Stufenbohrung befestigt ist. Der infolge des Vorsehens der Durchgangsbohrung hülsen- oder buchsenartige Schwenkzapfen kann somit vorteilhaft aus einem Lagerwerkstoff, z.B. einem Buntmetall ausgebildet werden, um die Reibpaarung der relativ zueinander verschwenkbaren Teile im Hinblick auf die Leichtgängigkeit der Schwenkbewegung und den Verschleiß der Reibflächen zu optimieren, während der Werkstoff des Befestigungselements (etwa Stahl) den jeweiligen Befestigungserfordernissen entsprechend unabhängig vom Werkstoff des Schwenkzapfens gewählt werden kann. Hierbei ist es ähnlich der vorbeschriebenen Alternative grundsätzlich denkbar, das Befestigungselement beispielsweise mittels einer Schraubverbindung in der Stufenbohrung zu befestigen, wobei der Schaft des Befestigungselements endseitig mit einem Gewinde versehen ist, das in ein im durchmesserkleinsten Bohrungsabschnitt der Stufenbohrung vorgesehenes Gegengewinde eingeschraubt ist. Insbesondere im Hinblick auf eine kostengünstige Herstellung bevorzugt ist jedoch auch hier eine Ausgestaltung, bei der der Schaft des Befestigungselements mit seinem Ende über den durchmesserkleinsten Bohrungsabschnitt der Stufenbohrung vorsteht, wobei das vorstehende Ende des Schafts zu einem Nietkopf angestaucht ist, so daß der Schwenkzapfen über den seinen Bund hintergreifenden Kopf des Befestigungselements mit seiner durchmesserkleineren Ringfläche auf die durchmesserkleinere Stufe der Stufenbohrung gezogen ist. Vorteilhaft kann dabei das Befestigen des Schwenkzapfens in der Stufenbohrung die folgenden Schritte umfassen: Einsetzen des Befestigungselements in die Durchgangsbohrung des Schwenkzapfens und Vernieten des über den durchmesserkleinsten Bohrungsabschnitt der Stufenbohrung vorstehenden Endes des Schafts des Befestigungselements zur Ausbildung des Nietkopfs.

Prinzipiell kann schließlich die Schaltgabel aus einem beliebigen Material ausgebildet, z.B. aus einem Schmiedestahl gesenkgeschmiedet werden, während die Schaltschiene etwa aus einem Rundmaterial hergestellt werden kann. Insbesondere im Hinblick auf geringe Rohteilkosten bevorzugt ist aber eine Ausgestaltung, bei der die Schaltschiene und/oder die Schaltgabel aus einem Flachmaterial hergestellt ist.

### KURZE BESCHREIBUNG DER ZEICHNUNGEN

Im folgenden wird die Erfindung anhand bevorzugter Ausführungsbeispiele unter Bezugnahme auf die beigefügten Zeichnungen näher erläutert, wobei gleiche oder entsprechende Teile mit den gleichen Bezugszeichen versehen sind. In den Zeichnungen zeigen:
- Fig. 1: eine abgebrochene perspektivische Darstellung einer Vorrichtung zur Übertragung von Schaltbewegungen nach einem ersten Ausführungsbeispiel der Erfindung, die eine Schaltgabel aus Flachmaterial, eine Schaltschiene aus Rundmaterial und einen Schwenkzapfen in der Form eines vernieteten Bundbolzens aufweist,
- Fig. 2: eine abgebrochene Draufsicht auf die Vorrichtung gemäß Fig. 1,
- Fig. 3: eine abgebrochene Schnittansicht der Vorrichtung gemäß Fig. 1 entsprechend der Schnittverlaufslinie III-III in Fig. 2,
- Fig. 4: eine Schnittansicht der Vorrichtung gemäß Fig. 1 entsprechend der Schnittverlaufslinie IV-IV in Fig. 3,
- Fig. 5: eine abgebrochene Schnittansicht der Vorrichtung gemäß Fig. 1 entsprechend der Schnittverlaufslinie III-III in Fig. 2 in einem gegenüber der Fig. 3 deutlich vergrößerten Maßstab, der weitere Details zur Ausbildung der Schwenkverbindung von Schaltgabel und Schaltschiene zu entnehmen sind,
- Fig. 6: eine hinsichtlich des Maßstabs der Fig. 5 entsprechende Seitenansicht des bei der Vorrichtung gemäß Fig. 1 verwendeten Schwenkzapfens im unvernieteten, d.h. unverformten Zustand,

- Fig. 7 bis 10: abgebrochene Schnittansichten von Schaltgabel und Schaltschiene der Vorrichtung gemäß Fig. 1, welche im Hinblick auf Schnittverlauf und Maßstab der Fig. 3 entsprechen und aufeinanderfolgende Herstellungsschritte bei der Ausbildung der Schwenkverbindung von Schaltgabel und Schaltschiene veranschaulichen,
- Fig. 11: eine abgebrochene perspektivische Darstellung einer Vorrichtung zur Übertragung von Schaltbewegungen nach einem zweiten Ausführungsbeispiel der Erfindung, die eine Schaltgabel aus Flachmaterial, eine Schaltschiene aus Flachmaterial und einen Schwenkzapfen in der Form eines vernieteten Bundbolzens aufweist,
- Fig. 12: eine im Hinblick auf Schnittverlauf und Maßstab der Fig. 5 entsprechende, abgebrochene Schnittansicht der Vorrichtung gemäß Fig. 11, der Details zur Ausbildung der Schwenkverbindung von Schaltgabel und Schaltschiene zu entnehmen sind,
- Fig. 13: eine hinsichtlich des Maßstabs der Fig. 12 entsprechende Seitenansicht des bei der Vorrichtung gemäß Fig. 11 verwendeten Schwenkzapfens im unvernieteten, d.h. unverformten Zustand,
- Fig. 14: eine abgebrochene perspektivische Darstellung einer Vorrichtung zur Übertragung von Schaltbewegungen nach einem dritten Ausführungsbeispiel der Erfindung, die eine Schaltgabel aus Flachmaterial, eine Schaltschiene aus Rundmaterial, einen Schwenkzapfen in der Form einer Bundhülse und einen letztere durchgreifenden Niet aufweist,
- Fig. 15: eine im Hinblick auf Schnittverlauf und Maßstab der Fig. 5 entsprechende, abgebrochene Schnittansicht der Vorrichtung gemäß Fig. 14, der Details zur Ausbildung der Schwenkverbindung von Schaltgabel und Schaltschiene zu entnehmen sind,
- Fig. 16: eine hinsichtlich des Maßstabs der Fig. 15 entsprechende Seitenansicht des bei der Vorrichtung gemäß Fig. 14 verwendeten Schwenkzapfens,
- Fig. 17: eine abgebrochene perspektivische Darstellung einer Vorrichtung zur Übertragung von Schaltbewegungen nach einem vierten Ausführungsbeispiel der Erfindung, die eine Schaltgabel aus Flachmaterial, eine Schaltschiene aus Flachmaterial, einen Schwenkzapfen in der Form einer Bundhülse und einen letztere durchgreifenden Niet aufweist,
- Fig. 18: eine im Hinblick auf Schnittverlauf und Maßstab der Fig. 5 entsprechende, abgebrochene Schnittansicht der Vorrichtung gemäß Fig. 17, der Details zur Ausbildung der Schwenkverbindung von Schaltgabel und Schaltschiene zu entnehmen sind, und
- Fig. 19: eine hinsichtlich des Maßstabs der Fig. 18 entsprechende Seitenansicht des bei der Vorrichtung gemäß Fig. 17 verwendeten Schwenkzapfens.

### DETAILLIERTE BESCHREIBUNG DER AUSFÜHRUNGSBEISPIELE

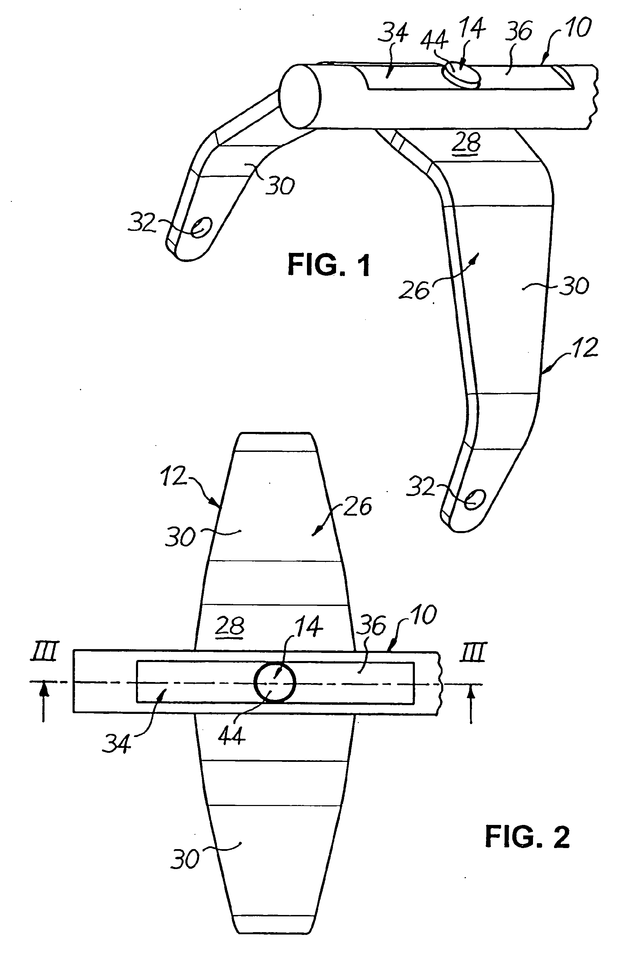

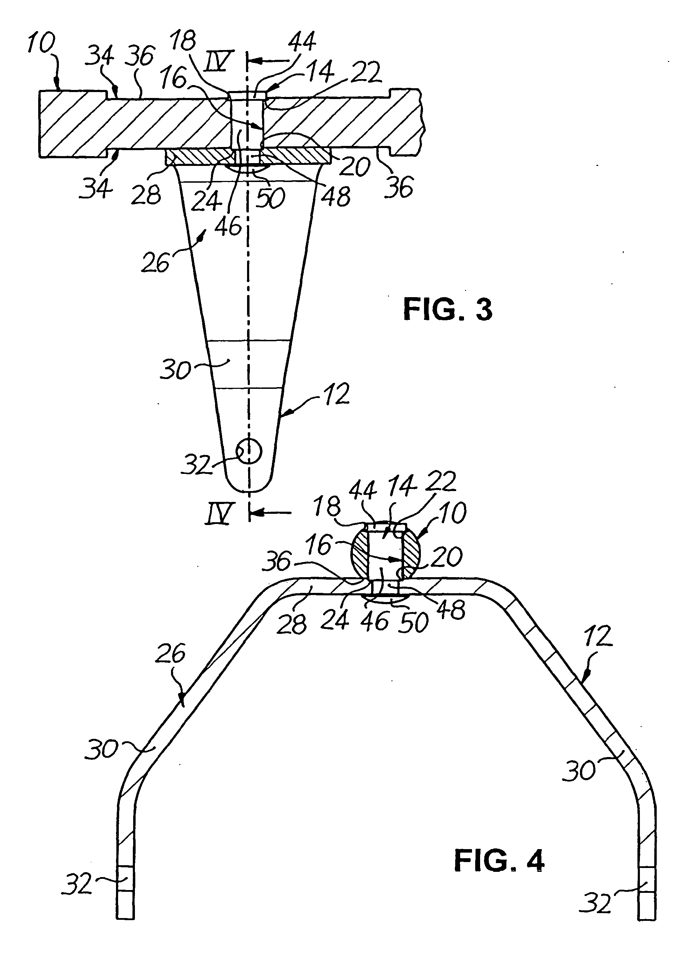

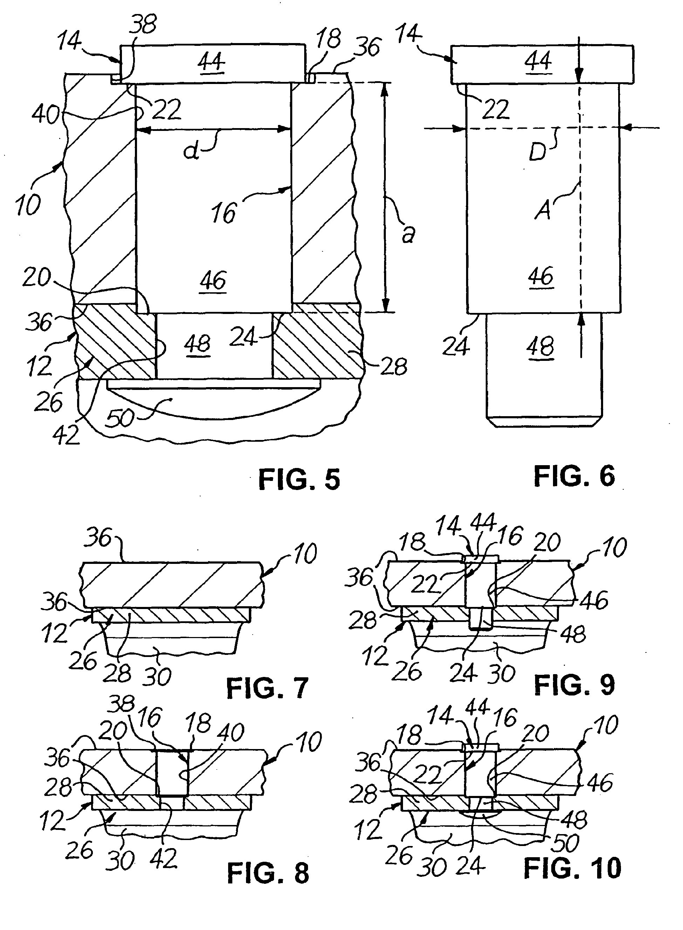

Die Fig. 1 bis 10 veranschaulichen ein erstes Ausführungsbeispiel einer Vorrichtung zur Übertragung von Schaltbewegungen in einem Kraftfahrzeug-Schaltgetriebe im nicht darin eingebauten Zustand, die eine Schaltschiene 10 und eine daran auf besondere Art und Weise schwenkgelagerte Schaltgabel 12 aufweist. Genauer gesagt sind die Schaltschiene 10 und die Schaltgabel 12 mittels eines rechtwinklig zur Schaltschienenachse gerichteten Schwenkzapfens 14 in Richtung der Schaltschienenachse relativ zueinander unverschiebbar festgelegt, während sie um die Schwenkzapfenachse relativ zueinander um einen geringen Winkelbetrag verschwenkbar sind. Wesentlich ist, daß, wie insbesondere die Fig. 3 bis 6 zeigen und nachfolgend noch näher erläutert werden wird, die Schaltschiene 10 und die Schaltgabel 12 unter Ausbildung einer Stufenbohrung 16 miteinander gebohrt sind, mit einer Stufe 18 an der Schaltschiene 10 und einer Stufe 20 an der Schaltgabel 12, während der Schwenkzapfen 14 zwei Ringflächen 22, 24 aufweist, von denen jede einer Stufe 18, 20 der Stufenbohrung 16 zugeordnet ist und deren axialer Abstand A (siehe Fig. 6) geringfügig größer ist als der axiale Abstand a (vergl. Fig. 5) zwischen den Stufen 18, 20 der Stufenbohrung 16, wobei der Außendurchmesser D des Schwenkzapfens 14 zwischen dessen Ringflächen 22, 24 (siehe Fig. 6) geringfügig kleiner ist als der Innendurchmesser d der Stufenbohrung 16 zwischen deren Stufen 18, 20 (vergl. Fig. 5), und der Schwenkzapfen 14 derart in der Stufenbohrung 16 befestigt ist, daß dessen durchmesserkleinere Ringfläche 24 an der durchmesserkleineren Stufe 20 der Stufenbohrung 16 anliegt, während die durchmessergrößere Ringfläche 22 des Schwenkzapfens 14 der durchmessergrößeren Stufe 18 der Stufenbohrung 16 gegenüberliegt.

Gemäß den Fig. 1 bis 4 weist die Schaltgabel 12 einen Grundkörper 26 auf, der im dargestellten Ausführungsbeispiel aus einem metallischen Flachmaterial hergestellt ist. Der Grundkörper 26 hat eine in einer Draufsicht gesehen (siehe die Fig. 2) im wesentlichen rechteckige, ebene Basis 28, mit zwei Längsseiten und zwei Querseiten. Die Stufenbohrung 16 verläuft mittig zwischen den Längs- und Querseiten der Basis 28 durch die Basis 28 hindurch, wie die Fig. 3 und 4 zeigen. Von jeder Querseite der Basis 28 erstreckt sich in bilateraler Symmetrie bezüglich einer gedachten, durch die Längsachse der Stufenbohrung 16 verlaufenden Ebene ein Schaltgabelarm 30 weg, wobei beide Schaltgabelarme 30 zur gleichen Seite von der Basis 28 abgebogen sind, so daß sie mit der Basis 28 einen vorbestimmten Winkel, im dargestellten Ausführungsbeispiel etwa 55° einschließen, wie in Fig. 4 zu erkennen ist. Letzterer ist auch zu entnehmen, daß die Schaltgabelarme 30 noch ein zweites Mal abgekröpft sind, derart, daß ihre freien Enden bezüglich der Basis 28 rechtwinklig stehen. Die freien Enden der Schaltgabelarme 30 sind im dargestellten Ausführungsbeispiel schließlich jeweils mit einer Befestigungsbohrung 32 versehen, die der Befestigung von nicht dargestellten Eingriffskörpern - auch "Padden" genannt - dienen, über welche die Schaltgabel 12 in an sich bekannter Weise mit der Schalt- bzw. Schiebemuffe (nicht gezeigt) des Kraftfahrzeug-Schaltgetriebes wirkverbindbar ist.

Die Schaltschiene 10 ist im dargestellten Ausführungsbeispiel aus einem metallischen Rundmaterial hergestellt, welches nahe seinem Ende auf gegenüberliegenden Seiten mit jeweils einer Abflachung oder Ausnehmung 34 versehen ist, die z.B. durch Räumen an dem Rundmaterial angearbeitet ist. Die Ausnehmungen 34 bilden planparallele Flächen 36 aus, von denen die in den Fig. 3 und 4 untere Fläche 36 als Führungsfläche für die Schaltgabel 12, genauer deren Basis 28 dient. Die in den Fig. 3 und 4 obere Ausnehmung 34 könnte jedoch auch entfallen. Auch durch die Schaltschiene 10 erstreckt sich die Stufenbohrung 16 hindurch, die mittig bezüglich der Ausnehmungen 34 liegt und senkrecht zur Längsachse der Schaltschiene 10 sowie zu den Flächen 36 verläuft.

Der Fig. 5 sind weitere Einzelheiten zu dem Schwenkzapfen 14 und der Stufenbohrung 16 zu entnehmen, die im dargestellten Ausführungsbeispiel ausgehend von der Schaltschiene 10 in die Schaltschiene 10 und die Schaltgabel 12 eingebracht ist, den jeweiligen Erfordernissen entsprechend aber auch ausgehend von der Schaltgabel 12 in die Schaltgabel 12 und die Schaltschiene 10 eingebracht sein kann. Gemäß Fig. 5 weist die Stufenbohrung 16 drei Bohrungsabschnitte 38, 40 und 42 mit sich von Abschnitt zu Abschnitt verkleinerndem Durchmesser auf, die über die Stufen 18 bzw. 20 miteinander verbunden sind. Hierbei befindet sich der durchmessergrößte Bohrungsabschnitt 38 nur in der Schaltschiene 10, der mittlere Bohrungsabschnitt 40 erstreckt sich von der Schaltschiene 10 in die Schaltgabel 12, genauer deren Basis 28 hinein und der durchmesserkleinste Bohrungsabschnitt 42 liegt alleine in der Schaltgabel 12. Wäre die Stufenbohrung 16 ausgehend von der Schaltgabel 12 in die Schaltgabel 12 und die Schaltschiene 10 eingebracht, läge die durchmessergrößere Stufe 18 in der Schaltgabel 12 und die durchmesserkleinere Stufe 20 in der Schaltschiene 10, mit dem durchmessergrößten Bohrungsabschnitt 38 in der Schaltgabel 12, dem mittleren Bohrungsabschnitt 40 in Schaltgabel 12 und Schaltschiene 10 und dem durchmesserkleinsten Bohrungsabschnitt 42 in der Schaltschiene 10.

Gemäß Fig. 5 hat des weiteren der Schwenkzapfen 14 einen im durchmessergrößten Bohrungsabschnitt 38 der Stufenbohrung 16 aufgenommenen, die durchmessergrößere Ringfläche 22 ausbildenden, zylindrischen Bund 44, einen im mittleren Bohrungsabschnitt 40 der Stufenbohrung 16 aufgenommenen, die durchmesserkleinere Ringfläche 24 ausbildenden, zylindrischen Lagerabschnitt 46 und einen im durchmesserkleinsten Bohrungsabschnitt 42 der Stufenbohrung 16 aufgenommenen Befestigungsabschnitt 48, mittels dessen der Schwenkzapfen 14 in der Stufenbohrung 16 befestigt ist. Genauer gesagt steht der Befestigungsabschnitt 48 des Schwenkzapfens 14 im dargestellten Ausführungsbeispiel mit seinem in Fig. 5 unteren Ende über den durchmesserkleinsten Bohrungsabschnitt 42 der Stufenbohrung 16 vor, wobei das vorstehende Ende des Befestigungsabschnitts 48 aus seiner zylindrischen Grundform zu einem Nietkopf 50 angestaucht ist, so daß der metallische Schwenkzapfen 14 zwischen seiner durchmesserkleineren Ringfläche 24 und dem Nietkopf 50 im durchmesserkleinsten Bohrungsabschnitt 42 der Stufenbohrung 16 gehalten ist.

Aufgrund der beschriebenen Ausbildung und Dimensionierung von Schwenkzapfen 14 und Stufenbohrung 16 kommt es im Hinblick auf Leichtgängigkeit und Spielarmut der Schwenkverbindung von Schaltschiene 10 und Schaltgabel 12 auf die Genauigkeit bzw. die Dickentoleranzen von Schaltschiene 10 und Schaltgabel 12 nicht mehr an. Etwaige Ungenauigkeiten, Toleranzen und/oder Toleranzabweichungen an Schaltschiene 10 und/oder Schaltgabel 12 werden vielmehr durch die Stufenbohrung 16 und den in der vorbeschriebenen Weise an die Stufenbohrung 16 angepaßten Schwenkzapfen 14 quasi automatisch kompensiert.

Zur Herstellung der Vorrichtung werden zunächst die Schaltschiene 10, die Schaltgabel 12 und der Schwenkzapfen 14 vorgefertigt. Hierbei werden nach Ablängen der Schaltschiene 10 die Ausnehmungen 34 an der Schaltschiene 10 z.B. durch Räumen erzeugt, wobei der Abstand der Flächen 36 an der Schaltschiene 10 keinen engen Maßtoleranzen genügen muß. Der Grundkörper 26 der Schaltgabel 12 wird - z.B. durch Feinschneiden aus einem Flachmaterial - zunächst als ein Flachteil mit der Basis 28 und den Schaltgabelarmen 30 hergestellt, wobei zugleich die Befestigungsbohrungen 32 für die Eingriffskörper erzeugt werden können, bevor die Schaltgabelarme 30 wie in Fig. 4 gezeigt definiert von der Basis 28 abgebogen werden. Der Schwenkzapfen 14 wird z.B. in einem Drehautomaten mit definierten Abmessungen, insbesondere vorbestimmt toleriertem axialen Abstand A der Ringflächen 22, 24 und Außendurchmesser D des Lagerabschnitts 46 fertigbearbeitet.

In der Folge werden die Schaltschiene 10 und die Schaltgabel 12 übereinandergelegt, so daß die Basis 28 der Schaltgabel 12 mit ihrer in Fig. 7 oberen Fläche an der in Fig. 7 unteren Fläche 36 der entsprechenden Ausnehmung 34 in der Schaltschiene 10 flächig anliegt. Sodann werden Schaltschiene 10 und Schaltgabel 12 ausgerichtet und in zueinander genau justierter Lage festgelegt.

Daraufhin werden die Schaltschiene 10 und die Schaltgabel 12 - im dargestellten Ausführungsbeispiel ausgehend von der Schaltschiene 10 - zur Ausbildung der Stufenbohrung 16 gemeinsam gebohrt, wofür vorzugsweise ein Zweifach-Stufenbohrer (nicht dargestellt) eingesetzt wird, so daß nur ein Bohrvorgang erforderlich ist. Der Bearbeitungsabschnitt des Zweifach-Stufenbohrers weist hierbei drei Schneidenbereiche auf, die bei einer Drehung des Bohrers unter einer axialen Vorschubbewegung jeweils eine Flug- bzw. Hüllkurve in der Form eines Zylindermantels definieren, wobei sich der Außendurchmesser der Zylindermäntel ausgehend vom freien Ende des Bohrers entsprechend dem Innendurchmesser der Bohrungsabschnitte 42, 40 und 38 der Stufenbohrung 16 vergrößert. Zwischen diesen Schneidenbereichen weist der Zweifach-Stufenbohrer darüber hinaus Axialschneiden auf, so daß der Bohrer zugleich dem Plansenken der Stufen 18, 20 dient, die demgemäß beim Bohrvorgang als senkrecht zur Drehachse der Schnittbewegung überstehende ebene Ringflächen mit erzeugt werden. Die Fig. 8 zeigt das Ergebnis des vorbeschriebenen Bohrvorgangs.

Als nächstes wird der Schwenkzapfen 14 in die Stufenbohrung 16 eingesetzt, wobei die in Fig. 9 untere Ringfläche 24 des Schwenkzapfens 14 an der in Fig. 9 unteren Stufe 20 der Stufenbohrung 16 zur Anlage gelangt. Infolge der getroffenen Abstimmung der Längsabmessungen a und A des Bohrungsabschnitts 40 der Stufenbohrung 16 bzw. des Lagerabschnitts 46 des Schwenkzapfens 14 stellt sich zwischen der in Fig. 9 oberen Stufe 18 der Stufenbohrung 16 und der in Fig. 9 oberen Ringfläche 22 am Schwenkzapfen 14 ein kleiner Spalt ein, der in den Figuren aufgrund des Maßstabs derselben nicht zu erkennen ist.

Schließlich wird der Schwenkzapfen 14 in der Stufenbohrung 16 befestigt, indem das über den durchmesserkleinsten Bohrungsabschnitt 42 der Stufenbohrung 16 in Fig. 9 nach unten vorstehende Ende des Befestigungsabschnitts 48 des Schwenkzapfens 14 zur Ausbildung des Nietkopfs 50 gemäß Fig. 10 vernietet wird. Nach Befestigen der Eingriffskörper (nicht dargestellt) in den Befestigungsbohrungen 32 - sofern dies nicht schon vorher erfolgte - kann jetzt die vormontierte Vorrichtung im Kraftfahrzeug-Schaltgetriebe in an sich bekannter Weise fertigmontiert werden.

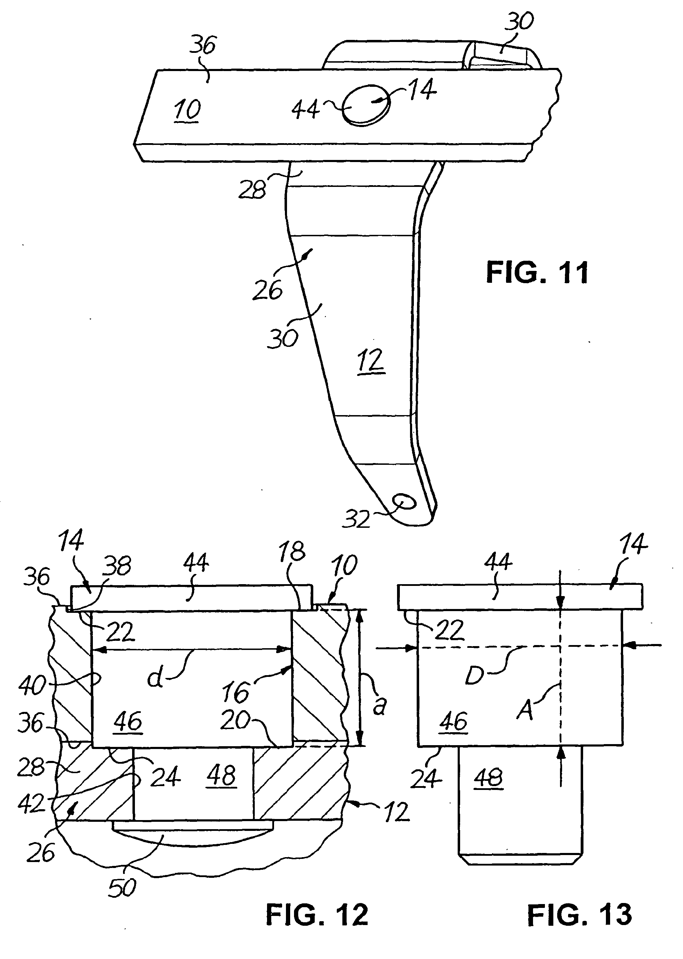

Im folgenden soll das zweite Ausführungsbeispiel der Vorrichtung unter Bezugnahme auf die Fig. 11 bis 13 nur insoweit beschrieben werden, als es sich von dem unter Bezugnahme auf die Fig. 1 bis 10 beschriebenen ersten Ausführungsbeispiel wesentlich unterscheidet.

Im Gegensatz zum ersten Ausführungsbeispiel ist bei dem zweiten Ausführungsbeispiel die Schaltschiene 10 nicht aus einem Rundmaterial hergestellt, sondern aus einem metallischen Flachmaterial, so daß bei dem zweiten Ausführungsbeispiel das Anarbeiten der Ausnehmungen 34 entfällt, das Rohmaterial für die Schaltschiene 10 die parallelen Flächen 36 vielmehr schon mitbringt. Außerdem sind bei dem zweiten Ausführungsbeispiel die radialen Abmessungen des Schwenkzapfens 14 und der Stufenbohrung 16, insbesondere an dem Lagerabschnitt 46 des Schwenkzapfens 14 bzw. dem Bohrungsabschnitt 40 der Stufenbohrung 16, verglichen zum ersten Ausführungsbeispiel etwas größer gewählt, was im Hinblick auf die Lochlaibung an der verglichen zum ersten Ausführungsbeispiel weniger dicken Schaltschiene 10 von Vorteil ist.

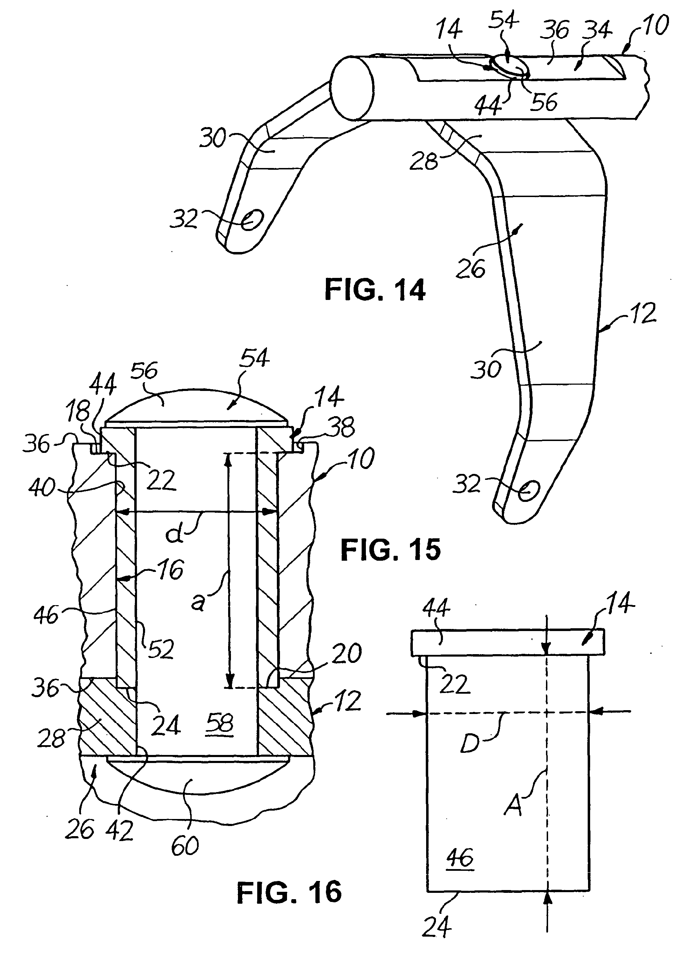

Auch das dritte Ausführungsbeispiel der Vorrichtung soll nachfolgend anhand der Fig. 14 bis 16 nur insoweit beschrieben werden, als es sich vom ersten und zweiten Ausführungsbeispiel wesentlich unterscheidet.

Wie bei dem ersten Ausführungsbeispiel ist zunächst die Schaltschiene 10 bei dem dritten Ausführungsbeispiel aus einem metallischen Rundmaterial ausgebildet. Die die Schaltschiene 10 und die Schaltgabel 12 durchsetzende Stufenbohrung 16 weist ferner bei dem dritten Ausführungsbeispiel ebenfalls drei Bohrungsabschnitte 38, 40, 42 mit sich von Abschnitt zu Abschnitt verkleinerndem Durchmesser auf, die über die Stufen 18 bzw. 20 miteinander verbunden sind.

Der Schwenkzapfen 14 ist jedoch anders ausgebildet als bei den vorhergehenden Ausführungsbeispielen: Zwar hat der Schwenkzapfen 14 auch einen im durchmessergrößten Bohrungsabschnitt 38 aufgenommenen, die durchmessergrößere Ringfläche 22 ausbildenden Bund 44 und einen im mittleren Bohrungsabschnitt 40 aufgenommenen, die durchmesserkleinere Ringfläche 24 ausbildenden Lagerabschnitt 46, er weist jedoch keinen Befestigungsabschnitt wie bei den vorgehenden Ausführungsbeispielen auf. Vielmehr hat der vorzugsweise aus einem Lagerwerkstoff, wie einem Buntmetall, gefertigte Schwenkzapfen 14 eine zentrale Durchgangsbohrung 52 zur Aufnahme eines Befestigungselements 54, deren Innendurchmesser im wesentlichen dem Innendurchmesser des durchmesserkleinsten Bohrungsabschnitts 42 der Stufenbohrung 16 entspricht. Im montierten Zustand des Befestigungselements 54, bei dem es sich im dargestellten Ausführungsbeispiel um einen handelsüblichen Niet handelt, hintergreift das Befestigungselement 54 den Bund 44 des Schwenkzapfens 14 mit einem Kopf 56 und erstreckt sich durch die Durchgangsbohrung 52 im Schwenkzapfen 14 hindurch in den durchmesserkleinsten Bohrungsabschnitt 42 der Stufenbohrung 16 hinein mit einem Schaft 58, mittels dessen das Befestigungselement 54 und somit der Schwenkzapfen 14 in der Stufenbohrung 16 befestigt ist. Genauer gesagt steht im dargestellten Ausführungsbeispiel der Schaft 58 des Befestigungselements 54 mit seinem Ende über den durchmesserkleinsten Bohrungsabschnitt 42 der Stufenbohrung 16 in Fig. 16 nach unten vor. Hier ist das vorstehende Ende des Schafts 58 zu einem Nietkopf 60 angestaucht, so daß der Schwenkzapfen 14 über den seinen Bund 44 hintergreifenden Kopf 56 des Befestigungselements 54 mit seiner durchmesserkleineren Ringfläche 24 auf die durchmesserkleinere Stufe 20 der Stufenbohrung 16 gezogen ist.

Die Herstellung bzw. Montage der Vorrichtung nach dem dritten Ausführungsbeispiel unterscheidet sich von dem zum ersten Ausführungsbeispiel beschriebenen Verfahren nur hinsichtlich der Vorfertigung des Schwenkzapfens 14, der ohne Befestigungsabschnitt z.B. von einem Rohrmaterial abgedreht werden kann, und der Befestigung des Schwenkzapfens 14 in der Stufenbohrung 16. Hierbei wird zur Befestigung des in die Stufenbohrung 16 eingefügten Schwenkzapfens 14 zunächst das Befestigungselement 54 mit seinem Schaft 58 in die Durchgangsbohrung 52 des Schwenkzapfens 14 und den durchmesserkleinsten Bohrungsabschnitt 42 der Stufenbohrung 16 eingesetzt. Sodann wird das über den durchmesserkleinsten Bohrungsabschnitt 42 der Stufenbohrung 16 vorstehende Ende des Schafts 58 des Befestigungselements 54 zur Ausbildung des Nietkopfs 60 vernietet, etwa warm- oder taumelvernietet.

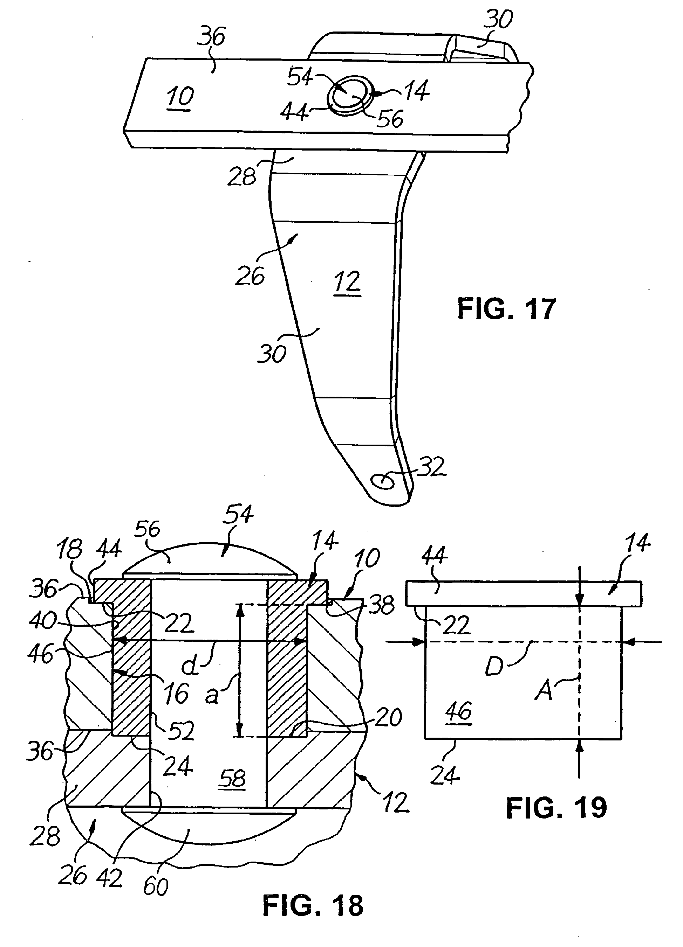

Das in den Fig. 17 bis 19 dargestellte vierte Ausführungsbeispiel der Vorrichtung unterscheidet sich schließlich von dem unter Bezugnahme auf die Fig. 14 bis 16 beschriebenen dritten Ausführungsbeispiel im wesentlichen darin, daß auch die Schaltschiene 10 aus einem metallischen Flachmaterial ausgebildet ist. Die zu dem unter Bezugnahme auf die Fig. 11 bis 13 beschriebenen zweiten Ausführungsbeispiel gemachten Ausführungen gelten hier analog.

Es wird eine besonders kostengünstig herstellbare Vorrichtung zur Übertragung von Schaltbewegungen offenbart, mit einer Schaltschiene und einer Schaltgabel, die mittels eines Schwenkzapfens relativ zueinander in Richtung der Schaltschienenachse unverschiebbar festgelegt sowie um die Schwenkzapfenachse leichtgängig und mit dennoch nur geringem Kippspiel verschwenkbar sind. Hierfür sind erfindungsgemäß Schaltschiene und Schaltgabel - vorzugsweise mittels eines Zweifach-Stufenbohrers - unter Ausbildung einer Stufenbohrung miteinander gebohrt, mit einer Schaltschienenstufe und einer Schaltgabelstufe, wobei der Schwenkzapfen zwei Ringflächen aufweist, von denen jede einer Stufe zugeordnet ist und deren axialer Abstand geringfügig größer ist als der zwischen den Stufen. Ferner ist der Schwenkzapfen-Außendurchmesser zwischen dessen Ringflächen geringfügig kleiner als der Innendurchmesser der Stufenbohrung zwischen deren Stufen. Dabei ist der Schwenkzapfen derart in der Stufenbohrung befestigt, daß dessen durchmesserkleinere Ringfläche an der durchmesserkleineren Stufe anliegt, während die durchmessergrößere Ringfläche der durchmessergrößeren Stufe geringfügig beabstandet gegenüberliegt.

### BEZUGSZEICHENLISTE

- 10: Schaltschiene
- 12: Schaltgabel
- 14: Schwenkzapfen
- 16: Stufenbohrung
- 18: Stufe
- 20: Stufe
- 22: Ringfläche
- 24: Ringfläche
- 26: Grundkörper
- 28: Basis
- 30: Schaltgabelarm
- 32: Befestigungsbohrung
- 34: Ausnehmung
- 36: Fläche
- 38: Bohrungsabschnitt
- 40: Bohrungsabschnitt
- 42: Bohrungsabschnitt
- 44: Bund
- 46: Lagerabschnitt
- 48: Befestigungsabschnitt
- 50: Nietkopf
- 52: Durchgangsbohrung
- 54: Befestigungselement
- 56: Kopf
- 58: Schaft
- 60: Nietkopf

- a: axialer Abstand der Stufen 18, 20
- A: axialer Abstand der Ringflächen 22, 24
- d: Innendurchmesser des Bohrungsabschnitts 40
- D: Außendurchmesser des Lagerabschnitts 46

## Patentansprüche

1. Vorrichtung zur Übertragung von Schaltbewegungen in einem Kraftfahrzeug-Schaltgetriebe, mit einer Schaltschiene (10) und einer Schaltgabel (12), die mittels eines rechtwinklig zur Schaltschienenachse gerichteten Schwenkzapfens (14) in Richtung der Schaltschienenachse relativ zueinander unverschiebbar festgelegt sind, während sie um die Schwenkzapfenachse relativ zueinander um einen geringen Winkelbetrag verschwenkbar sind,
**dadurch gekennzeichnet, daß** die Schaltschiene (10) und die Schaltgabel (12) unter Ausbildung einer Stufenbohrung (16) miteinander gebohrt sind, mit einer Stufe (18) an der Schaltschiene (10) und einer Stufe (20) an der Schaltgabel (12),
daß der Schwenkzapfen (14) zwei Ringflächen (22, 24) aufweist, von denen jede einer Stufe (18, 20) der Stufenbohrung (16) zugeordnet ist und deren axialer Abstand (A) geringfügig größer ist als der axiale Abstand (a) zwischen den Stufen (18, 20) der Stufenbohrung (16),
daß der Außendurchmesser (D) des Schwenkzapfens (14) zwischen dessen Ringflächen (22, 24) geringfügig kleiner ist als der Innendurchmesser (d) der Stufenbohrung (16) zwischen deren Stufen (18, 20), und
daß der Schwenkzapfen (14) derart in der Stufenbohrung (16) befestigt ist, daß dessen durchmesserkleinere Ringfläche (24) an der durchmesserkleineren Stufe (20) der Stufenbohrung (16) anliegt, während die durchmessergrößere Ringfläche (22) des Schwenkzapfens (14) der durchmessergrößeren Stufe (18) der Stufenbohrung (16) gegenüberliegt.

2. Vorrichtung nach Anspruch 1, **dadurch gekennzeichnet, daß** die Stufenbohrung (16) ausgehend von der Schaltschiene (10) in die Schaltschiene (10) und die Schaltgabel (12) eingebracht ist.

3. Vorrichtung nach Anspruch 1 oder 2, **dadurch gekennzeichnet, daß** die Stufenbohrung (16) drei Bohrungsabschnitte (38, 40, 42) mit sich von Abschnitt zu Abschnitt verkleinerndem Durchmesser aufweist, die über die Stufen (18, 20) miteinander verbunden sind, wobei der Schwenkzapfen (14) einen im durchmessergrößten Bohrungsabschnitt (38) aufgenommenen, die durchmessergrößere Ringfläche (22) ausbildenden Bund (44), einen im mittleren Bohrungsabschnitt (40) aufgenommenen, die durchmesserkleinere Ringfläche (24) ausbildenden Lagerabschnitt (46) und einen im durchmesserkleinsten Bohrungsabschnitt (42) aufgenommenen Befestigungsabschnitt (48) hat, mittels dessen der Schwenkzapfen (14) in der Stufenbohrung (16) befestigt ist.

4. Vorrichtung nach Anspruch 3, **dadurch gekennzeichnet, daß** der Befestigungsabschnitt (48) des Schwenkzapfens (14) mit seinem Ende über den durchmesserkleinsten Bohrungsabschnitt (42) der Stufenbohrung (16) vorsteht, wobei das vorstehende Ende des Befestigungsabschnitts (48) zu einem Nietkopf (50) angestaucht ist, so daß der Schwenkzapfen (14) zwischen seiner durchmesserkleineren Ringfläche (24) und dem Nietkopf (50) im durchmesserkleinsten Bohrungsabschnitt (42) der Stufenbohrung (16) gehalten ist.

5. Vorrichtung nach Anspruch 1 oder 2, **dadurch gekennzeichnet, daß** die Stufenbohrung (16) drei Bohrungsabschnitte (38, 40, 42) mit sich von Abschnitt zu Abschnitt verkleinerndem Durchmesser aufweist, die über die Stufen (18, 20) miteinander verbunden sind, wobei der Schwenkzapfen (14) einen im durchmessergrößten Bohrungsabschnitt (38) aufgenommenen, die durchmessergrößere Ringfläche (22) ausbildenden Bund (44), einen im mittleren Bohrungsabschnitt (40) aufgenommenen, die durchmesserkleinere Ringfläche (24) ausbildenden Lagerabschnitt (46) und eine zentrale Durchgangsbohrung (52) zur Aufnahme eines Befestigungselements (54) hat, das den Bund (44) des Schwenkzapfens (14) mit einem Kopf (56) hintergreift und sich durch die Durchgangsbohrung (52) im Schwenkzapfen (14) hindurch in den durchmesserkleinsten Bohrungsabschnitt (42) der Stufenbohrung (16) hinein mit einem Schaft (58) erstreckt, mittels dessen das Befestigungselement (54) und damit der Schwenkzapfen (14) in der Stufenbohrung (16) befestigt ist.

6. Vorrichtung nach Anspruch 5, **dadurch gekennzeichnet, daß** der Schaft (58) des Befestigungselements (54) mit seinem Ende über den durchmesserkleinsten Bohrungsabschnitt (42) der Stufenbohrung (16) vorsteht, wobei das vorstehende Ende des Schafts (58) zu einem Nietkopf (60) angestaucht ist, so daß der Schwenkzapfen (14) über den seinen Bund (44) hintergreifenden Kopf (56) des Befestigungselements (54) mit seiner durchmesserkleineren Ringfläche (24) auf die durchmesserkleinere Stufe (20) der Stufenbohrung (16) gezogen ist.

7. Vorrichtung nach einem der vorhergehenden Ansprüche, **dadurch gekennzeichnet, daß** die Schaltschiene (10) aus einem Flachmaterial hergestellt ist.

8. Vorrichtung nach einem der vorhergehenden Ansprüche, **dadurch gekennzeichnet, daß** die Schaltgabel (12) aus einem Flachmaterial hergestellt ist.

9. Verfahren zur Herstellung einer Vorrichtung zur Übertragung von Schaltbewegungen in einem Kraftfahrzeug-Schaltgetriebe nach einem der vorhergehenden Ansprüche, welches die folgenden Schritte umfaßt:
(a) Übereinanderlegen, Ausrichten und Festlegen von Schaltgabel (12) und Schaltschiene (10) in zueinander genau justierter Lage,
(b) gemeinsames Bohren von Schaltgabel (12) und Schaltschiene (10) zur Ausbildung der Stufenbohrung (16) mittels eines Zweifach-Stufenbohrers in einem Bohrvorgang,
(c) Einsetzen des Schwenkzapfens (14) in die Stufenbohrung (16) und
(d) Befestigen des Schwenkzapfens (14) in der Stufenbohrung (16).

10. Verfahren nach Anspruch 9, wobei das Befestigen des Schwenkzapfens (14) in der Stufenbohrung (16) im Falle der Vorrichtungsausbildung gemäß Anspruch 4 zur Ausbildung des Nietkopfs (50) ein Vernieten des über den durchmesserkleinsten Bohrungsabschnitt (42) der Stufenbohrung (16) vorstehenden Endes des Befestigungsabschnitts (48) des Schwenkzapfens (14) umfaßt.

11. Verfahren nach Anspruch 9, wobei das Befestigen des Schwenkzapfens (14) in der Stufenbohrung (16) im Falle der Vorrichtungsausbildung gemäß Anspruch 6 die folgenden Schritte umfaßt:
Einsetzen des Befestigungselements (54) in die Durchgangsbohrung (52) des Schwenkzapfens (14) und
Vernieten des über den durchmesserkleinsten Bohrungsabschnitt (42) der Stufenbohrung (16) vorstehenden Endes des Schafts (58) des Befestigungselements (54) zur Ausbildung des Nietkopfs (60).

## Claims

1. Device for transmitting shift movements in a motor vehicle gearbox, comprising a shift rail (10) and a shift fork (12) which are fixed by means of a pivot pin (14) oriented at right angles to the shift rail axis such that they cannot be displaced relative to one another in the direction of the shift rail axis but can pivot by a small angle relative to one another about the pivot pin axis,
**characterised in that** the shift rail (10) and the shift fork (12) are drilled so as to form a stepped bore (16) with one another, with one step (18) on the shift rail (10) and one step (20) on the shift fork (12),
**in that** the pivot pin (14) has two annular surfaces (22, 24), each of which is assigned to a step (18, 20) of the stepped bore (16) and the axial spacing (A) between which is slightly larger than the axial spacing (a) between the steps (18, 20) of the stepped bore (16),
**in that** the outer diameter (D) of the pivot pin (14) between the annular surfaces (22, 24) thereof is slightly smaller than the inner diameter (d) of the stepped bore (16) between the steps (18, 20) thereof, and
**in that** the pivot pin (14) is fixed in the stepped bore (16) in such a way that its smaller-diameter annular surface (24) bears against the smaller-diameter step (20) of the stepped bore (16) while the larger-diameter annular surface (22) of the pivot pin (14) lies opposite the larger-diameter step (18) of the stepped bore (16).

2. Device according to claim 1, **characterised in that** the stepped bore (16) is formed in the shift rail (10) and the shift fork (12) starting from the shift rail (10).

3. Device according to claim 1 or 2, **characterised in that** the stepped bore (16) has three bore sections (38, 40, 42) with a diameter that decreases from section to section, said bore sections being joined to one another via the steps (18, 20), wherein the pivot pin (14) has a collar (44) which is accommodated in the largest-diameter bore section (38) and forms the larger-diameter annular surface (22), a bearing section (46) which is accommodated in the middle bore section (40) and forms the smaller-diameter annular surface (24), and a fixing section (48) which is accommodated in the smallest-diameter bore section (42) and by means of which the pivot pin (14) is fixed in the stepped bore (16).

4. Device according to claim 3, **characterised in that** the fixing section (48) of the pivot pin (14) protrudes with its end beyond the smallest-diameter bore section (42) of the stepped bore (16), wherein the protruding end of the fixing section (48) is upset to form a rivet head (50) so that the pivot pin (14) is held between its smaller-diameter annular surface (24) and the rivet head (50) in the smallest-diameter bore section (42) of the stepped bore (16).

5. Device according to claim 1 or 2, **characterised in that** the stepped bore (16) has three bore sections (38, 40, 42) with a diameter that decreases from section to section, said bore sections being joined to one another via the steps (18, 20), wherein the pivot pin (14) has a collar (44) which is accommodated in the largest-diameter bore section (38) and forms the larger-diameter annular surface (22), a bearing section (46) which is accommodated in the middle bore section (40) and forms the smaller-diameter annular surface (24), and a central through-bore (52) for accommodating a fixing element (54) which engages with a head (56) behind the collar (44) of the pivot pin (14) and extends with a shaft (58) through the through-bore (52) in the pivot pin (14) into the smallest-diameter bore section (42) of the stepped bore (16), by means of which the fixing element (54) and thus the pivot pin (14) is fixed in the stepped bore (16).

6. Device according to claim 5, **characterised in that** the shaft (58) of the fixing element (54) protrudes with its end beyond the smallest-diameter bore section (42) of the stepped bore (16), wherein the protruding end of the shaft (58) is upset to form a rivet head (60) so that the pivot pin (14) is held with its smaller-diameter annular surface (24) on the smaller-diameter step (20) of the stepped bore (16) via the head (56) of the fixing element (54) engaging behind its collar (44).

7. Device according to one of the preceding claims, **characterised in that** the shift rail (10) is made of a flat material.

8. Device according to one of the preceding claims, **characterised in that** the shift fork (12) is made of a flat material.

9. Method for producing a device for transmitting shift movements in a motor vehicle gearbox according to one of the preceding claims, which method comprises the following steps:
(a) superposing, aligning and fixing the shift fork (12) and the shift rail (10) in a precisely adjusted position with respect to one another,
(b) jointly drilling the shift fork (12) and the shift rail (10) to form the stepped bore (16) by means of a double-stepped drill in a drilling operation,
(c) inserting the pivot pin (14) into the stepped bore (16), and
(d) fixing the pivot pin (14) in the stepped bore (16).

10. Method according to claim 9, wherein the fixing of the pivot pin (14) in the stepped bore (16) in the embodiment of the device according to claim 4 comprises riveting the end of the fixing section (48) of the pivot pin (14) which protrudes beyond the smallest-diameter bore section (42) of the stepped bore (16) in order to form the rivet head (50).

11. Method according to claim 9, wherein the fixing of the pivot pin (14) in the stepped bore (16) in the embodiment of the device according to claim 6 comprises the following steps:
inserting the fixing element (54) into the through-bore (52) of the pivot pin (14), and
riveting the end of the shaft (58) of the fixing element (54) which protrudes beyond the smallest-diameter bore section (42) of the stepped bore (16) in order to form the rivet head (60).

## Revendications

1. Dispositif de transmission de mouvements de changement de vitesses dans une boîte de vitesses pour véhicule, comportant une tige de commande des fourchettes (10) et une fourchette de boîte de vitesses (12), qui sont fixées non déplaçables l'une par rapport à l'autre dans la direction de l'axe de la tige de commande des fourchettes grâce à un tourillon (14) perpendiculaire à l'axe de la tige de commande des fourchettes, tandis qu'elles peuvent être déplaçables l'une par rapport à l'autre autour de l'axe de tige de commande des fourchettes d'un petit angle,
**caractérisé en ce que** l'axe de tige de commande des fourchettes (10) et la fourchette (12) sont percés sous la forme d'un alésage en gradin (16), comportant un étage (18) pour la tige de commande des fourchettes (10) et un étage pour la fourchette (12),
**en ce que** le tourillon (14) présente deux surfaces d'anneau (22, 24), dont chacun est disposé à un étage (18, 20) de l'alésage en gradin (16) et dont la distance axiale (A) est légèrement supérieure à la distance axiale (a) entre les étages (18, 20) de l'alésage en gradin (16),
**en ce que** le diamètre extérieur (D) du tourillon (14) entre les surfaces d'anneau (22, 24) de celui-ci est légèrement plus petit que le diamètre intérieur (d) de l'alésage en gradin (16) entre les étages (18, 20) de celui-ci, et
**en ce que** le tourillon (14) est fixé dans l'alésage en gradin (16) de sorte que la surface d'anneau (24) de plus petit diamètre de celui-ci se trouve à l'étage de plus petit diamètre (20) de l'alésage en gradin (16), tandis que la surface d'anneau de plus grand diamètre (22) du tourillon (14) se trouve en vis-à-vis de l'étage de plus grand diamètre (18) de l'alésage en gradin (16).

2. Dispositif selon la revendication 1, **caractérisé en ce que** l'alésage en gradin (16) est introduit à partir de la tige de commande des fourchettes (10) dans la tige de commande des fourchettes (10) et dans la fourchette (12).

3. Dispositif selon la revendication 1 ou 2, **caractérisé en ce que** l'alésage en gradin (16) présente trois tronçons d'alésage (38, 40, 42) avec un diamètre se rétrécissant de tronçon en tronçon, qui sont reliés l'un à l'autre par l'intermédiaire des étages (18, 20), dans lequel le tourillon (14) possède un collet de butée (44) reçu dans le tronçon d'alésage de plus grand diamètre (38) formant la surface d'anneau de grand diamètre (22), un tronçon de palier (46) reçu dans le tronçon d'alésage médian (40) formant la surface d'anneau de petit diamètre (24), et. un tronçon de fixation (48) reçu dans le tronçon de plus petit diamètre (42), grâce auquel le tourillon (14) est fixé dans l'alésage en gradin (16).

4. Dispositif selon la revendication 3, **caractérisé en ce que** le tronçon de fixation (48) du tourillon (14) fait saillie avec son extrémité au-dessus du tronçon d'alésage de plus petit diamètre (42) de l'alésage en gradin (16), dans lequel l'extrémité faisant saillie du tronçon de fixation (48) est refoulée en une tête de rivet (50), de sorte que le tourillon (14) est maintenu entre sa surface d'anneau de petit diamètre (24) et la tête de rivet (50) dans le tronçon de fixation de plus petit diamètre (42) de l'alésage en gradin (16).

5. Dispositif selon la revendication 1 ou 2, **caractérisé en ce que** l'alésage en gradin (16) présente trois tronçons d'alésage (38, 40, 42) avec un diamètre se rétrécissant de tronçon en tronçon, qui sont reliés l'un à l'autre par l'intermédiaire des étages (18, 20), dans lequel le tourillon (14) possède un collet de butée (44) reçu dans le tronçon d'alésage de plus grand diamètre (38) formant la surface d'anneau de grand diamètre (22), un tronçon de palier (46) reçu dans le tronçon d'alésage médian (40) formant la surface d'anneau de petit diamètre (24) et un alésage de passage central (52) pour recevoir un élément de fixation (54), qui agrippe le collet de butée (44) du tourillon (14) avec une tête (56) et s'étend à travers l'alésage de passage (52) dans le tourillon dans le tronçon d'alésage de plus petit diamètre (42) de l'alésage en gradin (16) avec un arbre (58), grâce auquel l'élément de fixation (54) ainsi que le tourillon (14) sont fixés dans l'alésage en gradin (16).

6. Dispositif selon la revendication 5, **caractérisé en ce que** l'arbre (58) de l'élément de fixation (54) fait saillie avec son extrémité au-dessus du tronçon d'alésage de plus petit diamètre (42) de l'alésage en gradin (16), dans lequel l'extrémité faisant saillie de l'arbre (58) est refoulée en une tête de rivet (60), de sorte que le tourillon (14) est tiré au-dessus de la tête (56) de l'élément de fixation (54) agrippant son collet de butée (44) par sa surface d'anneau de petit diamètre (24) vers l'étage de petit diamètre (20) de l'alésage en gradin (16).

7. Dispositif selon l'une des revendications précédentes, **caractérisé en ce que** la tige de commande de fourchette (10) est fabriquée en matériau plat.

8. Dispositif selon l'une des revendications précédentes, **caractérisé en ce que** la fourchette (12) est fabriquée en matériau plat.

9. Procédé de fabrication d'un dispositif de transmission de mouvements de changement de vitesses dans une boîte de vitesses pour véhicule selon l'une des revendications précédentes, comprenant les étapes suivantes:
(a) la superposition, l'orientation et la fixation d'une fourchette (12) et d'une tige de commande des fourchettes (10) en une position ajustée précisément l'une par rapport à l'autre,
(b) le perçage commun de la fourchette (12) et de la tige de commande des fourchettes (10) pour former l'alésage en gradin (16) au moyen d'un foret étagé double lors d'un processus de perçage,
(c) l'introduction du tourillon (14) dans l'alésage en gradin (16) et
(d) la fixation du tourillon (14) dans l'alésage en gradin (16).

10. Procédé selon la revendication 9, dans lequel la fixation du tourillon (14) dans l'alésage en gradin (16) comporte, dans le cas de la réalisation du dispositif selon la revendication 4 en vue de la formation de la tête de rivet (50), un rivetage de l'extrémité du tronçon de fixation (48) du tourillon (14) faisant saillie au-dessus du tronçon d'alésage de plus petit diamètre (42) de l'alésage en gradin (16).

11. Procédé selon la revendication 9, dans lequel la fixation du tourillon (14) dans l'alésage en gradin (16), dans le cas de la réalisation du dispositif selon la revendication 6, comporte les étapes suivantes :
l'introduction de l'élément de fixation (54) dans l'alésage de passage (52) du tourillon (14) et
le rivetage de l'extrémité de l'arbre (58) de l'élément de fixation (54) faisant saillie au-dessus du tronçon d'alésage de plus petit diamètre (42) de l'alésage en gradin (16) en vue de la formation de tête de rivet (60).
